# FASCICULE DE BREVET EUROPEEN

(11) **EP 0 963 062 B1**
(45) Date de publication et mention de la délivrance du brevet: **23.01.2002**
(21) Numéro de dépôt: 99400752.4
(22) Date de dépôt: 29.03.1999
(51) Int. Cl.: H04B 7/185

(54) **Procédé de communication entre stations terrestres à l'aide d'une constellation de satellites**
Kommunikationsverfahren zwischen Bodenstationen mit Hilfe einer Satelliten-Konstellation
Ground station communication method through a satellite constellation

(30) Priorité: 16.04.1998 FR 9804750
(43) Date de publication de la demande: 08.12.1999
(73) Titulaire: ALCATEL, 75008 Paris (FR)
(72) Inventeur: Lenormand, Régis, 31700 Blagnac (FR); Argagnon, Claude, 31170 Tournefeuille (FR); Bouin, Jean, 31000 Toulouse (FR); Chretien, Gérald, 78350 Jouy en Josas (FR); Delamotte, Luc, 31400 Toulouse (FR); Roullet, Laurent, 31500 Toulouse (FR); Voisin, Philippe, 31170 Tournefeuille (FR)
(74) Mandataire: Lamoureux, Bernard

(56) Documents cités:
- EP-A- 0 780 998
- US-A- 4 912 656

## Description

L'invention est relative à un procédé de communication entre stations ou usagers terrestres à l'aide de satellites.

L'augmentation croissante du débit des télécommunications entraîne un développement des divers types de communications, notamment les communications relayées par satellites. Plusieurs systèmes de communication de ce type sont en projet. Ces systèmes font, en général, appel à des constellations de satellites dits "à orbites basses" ou à "orbites moyennes". Dans une constellation de ce genre, plusieurs satellites se trouvent sur une même orbite, par exemple à une hauteur comprise entre 1000 et 1500 Km au-dessus de la surface de la terre, et la constellation comporte une pluralité d'orbites, le plus souvent sous forme de paires d'orbites rapprochées les unes des autres. L'ensemble des orbites ou des paires d'orbites est tel qu'il couvre la plupart de la surface de la terre pour laquelle des communications sont utiles.

Pour des communications par satellites entre des usagers qui peuvent se trouver pratiquement en n'importe quel point du globe terrestre, on a déjà proposé un système de type "Internet" dans lequel la transmission des informations entre deux usagers distants l'un de l'autre est effectuée par des liaisons entre satellites. Dans ce système, le nombre de satellites et leur répartition sont tels que chaque usager peut communiquer directement à chaque instant avec un satellite, et la transmission des informations entre deux usagers s'effectue par l'intermédiaire des satellites avec lesquels ces usagers communiquent directement. La liaison entre les satellites communiquant directement avec les usagers est réalisée par l'intermédiaire d'autres satellites de la constellation. Le choix des satellites intermédiaires, c'est-à-dire le routage des informations, est réalisé de façon individuelle pour chaque communication à l'aide de moyens de gestion à bord de chaque satellite.

Un tel système de télécommunication nécessite une grande densité de satellites. Ce système est donc onéreux. La gestion du routage à bord de chaque satellite augmente encore le prix de ce système.

Il existe aussi d'autres systèmes de télécommunication par satellites dans lesquels, à l'intérieur d'une zone terrestre déterminée, les communications s'effectuent par l'intermédiaire du seul satellite passant au-dessus de cette zone. Quand le satellite quitte la zone considérée, un autre satellite prend le relais. Dans ce système, les usagers d'une même zone communiquent par l'intermédiaire d'un seul satellite et les communications entre usagers de zones différentes doivent être effectuées par d'autres moyens que par les satellites. Il est d'une grande simplicité. Toutefois, ses capacités de communication sont limitées.

L'art antérieur est également représenté par le document US 4 912 656 qui prévoit un traitement à bord tel que le système de communication est très onéreux, et par le document EP 0 780 998 qui ne permet pas de faire un traitement simple des liens entre satellites.

Le procédé selon l'invention permet des communications entre des stations ou usagers terrestres éloignés par l'intermédiaire de satellites et il fait appel à un système de communication peu onéreux.

Le procédé selon l'invention est caractérisé en ce que, pour établir, à l'aide d'une constellation de satellites, une communication entre deux stations ou usagers terrestres éloignés, à chaque instant la liaison entre le satellite communiquant directement avec une première station (ou usager) et le satellite communiquant directement avec une seconde station (ou usager) s'effectue par l'intermédiaire d'au moins un lien prédéterminé.

Autrement dit, le routage des informations entre satellites est prédéterminé. Il n'est donc pas nécessaire de prévoir des moyens de gestion complexes à bord de chaque satellite.

Le procédé selon l'invention est en outre caractérisé par le fait que la communication entre satellites s'effectue par voie optique. Enfin, pour obtenir un grand débit d'informations, il est prévu d'utiliser plusieurs longueurs d'onde. On peut tirer avantage de cette pluralité de longueurs d'onde pour effectuer l'adressage d'un satellite à un autre. Par exemple, la communication peut être telle qu'un message porté par une longueur d'onde λₙ soit destiné au nième satellite devant le satellite émetteur.

Par lien prédéterminé on entend que la communication entre les satellites communiquant directement avec les stations terrestres s'effectue par un ou plusieurs satellites prédéterminés. Si les satellites communiquant directement avec les stations terrestres sont à une distance suffisamment faible l'un de l'autre, la communication peut s'effectuer sans intermédiaire.

Les liens entre satellites sont déterminés, par exemple, à l'aide d'une programmation préalable. Ces liens peuvent être commandés par une station au sol, ce qui minimise encore plus les moyens de commande embarqués.

La prédétermination des liaisons entre satellites est rendue possible par le fait qu'à chaque instant la position de chaque satellite est connue. On sait donc, à chaque instant, quels sont les satellites pouvant communiquer entre eux du fait de leurs positions et de la distance qui les sépare.

Pendant la durée d'une communication entre deux stations, ou usagers, terrestres, la liaison peut être modifiée. En effet, chaque station reste en communication directe avec un satellite pendant un temps limité en raison du déplacement du satellite. Dans ces conditions, quand un autre satellite prend le relais de la communication directe, un autre lien prédéterminé est établi.

Dans un mode de réalisation préféré de l'invention, à chaque lien entre deux satellites, on associe au moins un autre lien prédéterminé de façon que ce dernier remplace le premier lien en cas de défaillance, le premier lien étant prioritaire. Ce deuxième lien est avantageusement un lien complémentaire, c'est-à-dire tel que l'ensemble du premier et du deuxième liens forme un anneau autour de la terre.

D'autres caractéristiques et avantages de l'invention apparaîtront avec la description de certains de ses modes de réalisation, celle-ci étant effectuée en se référant aux dessins ci-annexés sur lesquels :
la figure 1 est un schéma montrant la terre et une constellation de satellites de communication,
la figure 2 est un schéma simplifié montrant comment un lien est établi, conformément à l'invention, entre deux stations terrestres,
la figure 3 est un diagramme montrant en projection des liens de communication, conformes à l'invention, entre satellites,
la figure 4 est un schéma expliquant un moyen de communication optique entre satellites,
la figure 5 est un schéma montrant les communications entre une station terrestre et un satellite ainsi qu'entre ce satellite et deux autres satellites voisins, et
la figure 6 est un schéma de moyens embarqués à bord d'un satellite faisant partie d'un système selon l'invention.

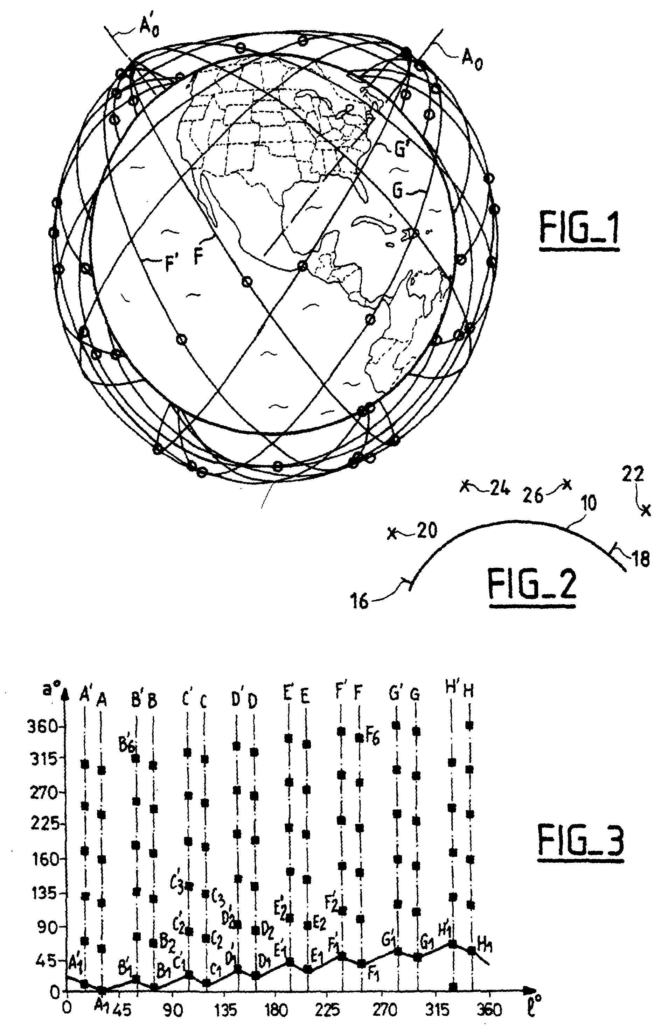

Le procédé de communication selon l'invention fait appel à une constellation de satellites tournant autour de la terre 10 (figure 1).

Dans l'exemple, la constellation comporte 96 satellites disposés sur seize orbites AA', BB', ..., HH' (figure 3) inclinées par rapport à l'axe des pôles. Chaque orbite comporte six satellites. Les orbites sont à une altitude d'environ 1500 Km au-dessus de la surface de la terre.

Les orbites se présentent sous forme de huit paires. Quatre de ces paires sont inclinées dans un sens par rapport à l'axe des pôles et les quatre autres paires sont inclinées du même angle par rapport à l'axe des pôles. Ainsi, le premier ensemble de quatre paires est réparti uniformément autour d'un axe A₀ passant par le centre de la terre et incliné par rapport à l'axe des pôles, tandis que le second ensemble des quatre paires d'orbites est réparti uniformément autour d'un axe A'₀ symétrique de l'axe A₀ par rapport à l'axe des pôles. Les sommets des orbites au voisinage des pôles sont répartis sur des calottes circulaires centrées sur les axes A₀ et A'₀.

La figure 3 représente, à un instant déterminé, la position des 96 satellites de la constellation. Dans chaque paire d'orbites, les noeuds ascendants sont séparés l'un de l'autre de 15°.

On rappelle ici que le noeud ascendant est un paramètre définissant une orbite. Ce noeud ascendant est la longitude de l'intersection de l'orbite considérée avec le plan de l'équateur dans la zone où le satellite se déplace du sud vers le nord.

Sur le diagramme de la figure 3, on a porté en abscisses les longitudes 1 des noeuds ascendants, la longitude de 0° (et 360°) correspondant au méridien de Greenwich. On a porté en ordonnées l'anomalie moyenne a, c'est-à-dire la position du satellite sur son orbite exprimée par l'écart angulaire (par rapport au centre de la terre) avec le noeud ascendant. Ainsi, un satellite d'anomalie 0° (ou 360°) est un satellite se trouvant dans le plan de l'équateur. Un satellite d'anomalie +90° correspond à un satellite dont la position est la plus proche du pôle nord.

Sur la figure 3, chaque satellite est identifié par le nom de son orbite A', A, B', B ... H', H et par un indice correspondant à son rang sur l'orbite, le rang 1 indiquant une anomalie nulle ou l'anomalie positive de la plus petite valeur.

Cette constellation de satellites permet d'établir des liaisons entre stations terrestres éloignées. On a représenté sur le schéma de la figure 2 le globe terrestre 10 et deux stations 16 et 18 séparées par une distance telle que ces deux stations ne peuvent pas communiquer par l'intermédiaire du même satellite.

Chaque station communique, à un instant donné, avec un satellite déterminé qui, à cet instant, est visible par la station. Dans le schéma de la figure 2, la station 16 communique avec un satellite 20, tandis que la station 18 communique avec un satellite 22. Par "communiquer", on entend ici que la station reçoit directement des messages du satellite correspondant et émet des messages directement vers ce satellite.

Selon l'invention, la communication entre les stations 16 et 18, et donc entre les satellites 20 et 22, est établie par l'intermédiaire d'autres satellites de la constellation, à savoir les satellites 24 et 26, ces derniers étant prédéterminés. Autrement dit, la communication entre les satellites 20 et 22 ne s'établit pas en fonction de critères déterminés par la communication elle-même, tels que, par exemple, l'encombrement d'une liaison, mais la communication entre les satellites 20 et 22 s'effectue d'une façon préétablie par programme ou par commande effectuée à partir d'une station terrestre (non montrée).

Sur le schéma de la figure 2, les satellites 20, 22, 24 et 26 ont été représentés dans le même plan pour simplifier. Toutefois, ils ne font, en général, pas partie de la même orbite, comme on le verra plus loin.

Le lien prédéterminé, par l'intermédiaire des satellites 24 et 26, entre les satellites 20 et 22 est en général conservé tant que les stations terrestres 16 et 18 communiquent directement avec les satellites 20 et 22. Ensuite, deux autres satellites prennent le relais des satellites 20 et 22 avec un nouveau lien par l'intermédiaire d'autres satellites prédéterminés, comme on va le voir ci-après avec la description de la figure 3.

On notera ici cependant que deux usagers rapprochés, qui se trouvent en vision directe d'un même satellite, communiquent par l'intermédiaire de ce même satellite. En outre si les deux satellites sont à une distance suffisamment faible ils peuvent communiquer directement.

Dans l'exemple représenté sur la figure 3 on fait communiquer le satellite B'₁ avec le satellite F₁. Dans ce cas, le lien prédéterminé entre B'₁ et F₁ est le suivant : B'₁, B₁, C'₁, C₁, D'₁, D₁, E'₁, E₁, F'₁ et F₁. Il existe également un lien complémentaire sur l'anneau qui fait le tour de la terre, c'est-à-dire : B'₁, A₁, A'₁, H₁, H'₁, G₁, G'₁ et F₁.

Les satellites se déplaçant sur leur orbite (du bas vers le haut sur la figure 3), après un certain temps les stations terrestres communiquant par l'intermédiaire des satellites B'₁ et F₁ perdent ces satellites de vue. La communication est alors établie par l'intermédiaire des satellites qui se trouvent dans leur champ de vision, par exemple les satellites B'₆ et F₆ (les satellites suivants sur les mêmes orbites dans cet exemple). Dans ce cas, la communication entre ces satellites, qui prennent le relais, s'effectue par l'intermédiaire d'une liaison entre satellites analogue à la liaison B'₁, F₁ décrite ci-dessus.

La liaison en anneau, c'est-à-dire de B'₁ à F₁ et de F₁ à B'₁ constitue une redondance permettant de pallier les pannes éventuelles de l'un des satellites sur un lien.

Cette redondance peut, en variante, être obtenue d'une façon différente qu'un anneau ceinturant la terre, par exemple par le lien B'₁, B₂, C'₂, C₂, D'₂, D₂, E'₂, E₂, F'₂, F₁. De toute façon, il est important que ce lien redondant soit prédéterminé.

Dans une autre réalisation, la redondance est utilisée pour transmettre des communications de natures différentes, par exemple des communications sur des bandes passantes différentes, ou des communications à des débits d'informations différents.

Bien qu'on ait décrit précédemment une constellation de satellites présentant des orbites inclinées par rapport au pôle, il va de soi que l'invention n'est pas limitée à ce cas. Elle s'applique aussi quand les orbites sont polaires.

Les liaisons inter-satellites sont δ de type optique. Le nécessaire multiplexage des informations est effectué en choisissant plusieurs longueurs d'onde optiques porteuses.

Pour minimiser le traitement à bord de chaque satellite, la longueur d'onde optique sur laquelle est portée un message représente l'adresse finale (c'est-à-dire l'identité du satellite) de la communication.

Pour comprendre ce système de multiplexage, on prend ici l'exemple d'une transmission faisant appel à seize longueurs d'onde optique différentes qui sont réparties sur quatre satellites. Chaque satellite de rang n peut traiter quatre longueurs d'onde et transmettre, sans traitement, trois longueurs d'onde vers le satellite de rang n+1, deux longueurs d'onde vers le satellite de rang n+2 et une longueur d'onde vers le satellite de rang n+3. En outre, ce satellite émet sur quatre longueurs d'onde destinées aux satellites de rangs, respectivement, n+1, n+2, n+3 et n+4, la longueur d'onde destinée au rang n+4 correspondant à une longueur d'onde traitée par le satellite de rang n.

Ainsi, on constitue un relais de communication par groupes de quatre satellites qui se suivent.

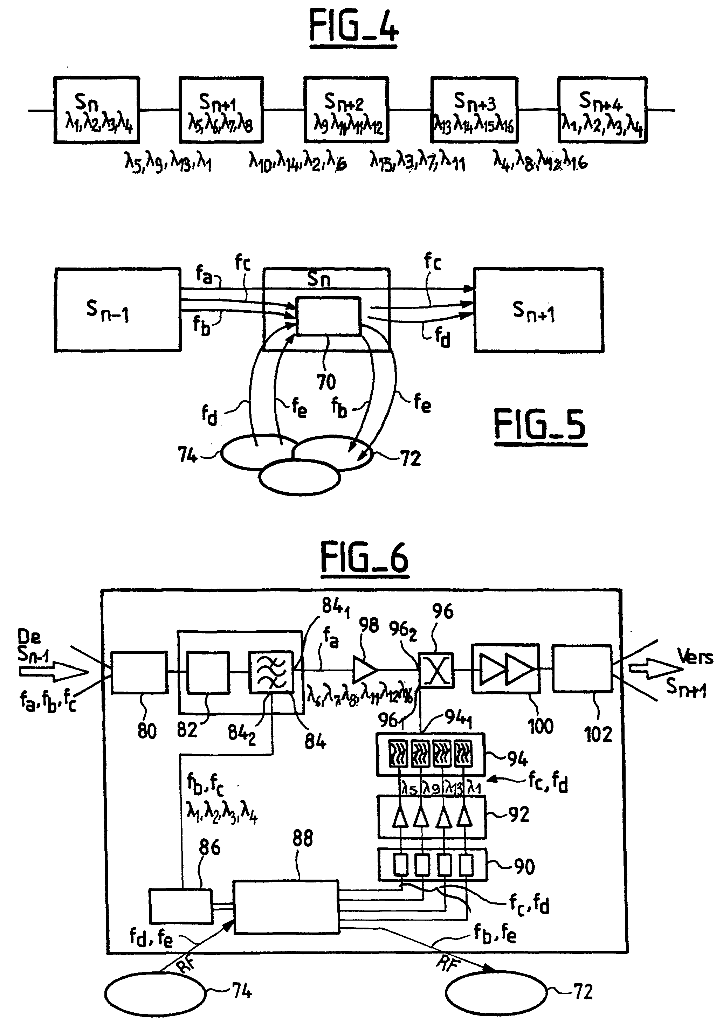

Cet exemple est illustré par la figure 4 qui est un schéma montrant la répartition des seize longueurs d'onde λ₁ à λ₁₆. Sur cette figure, on a représenté par des blocs les satellites Sₙ, Sₙ₊₁, Sₙ₊₂, Sₙ₊₃ et Sₙ₊₄. Les longueurs d'onde inscrites dans chaque bloc correspondent aux longueurs d'onde destinées aux satellites concernés, tandis que les longueurs d'onde apparaissant entre deux satellites correspondent aux longueurs d'onde de communication entre le satellite à gauche de ces longueurs d'onde et les quatre satellites suivants.

Ainsi, le satellite Sₙ reçoit les longueurs d'onde λ₁, λ₂, λ₃ et λ₄ qui proviennent des quatre satellites précédents de la chaîne, c'est-à-dire les satellites de rangs n-4 à n-1 (non représentés). Ces longueurs d'onde λ₁, λ₂, λ₃ et λ₄ sont traitées par le satellite Sₙ.

Ce satellite Sₙ transmet par ailleurs, sans traitement, les longueurs d'onde λ₆, λ₇, λ₈, λ₁₁, λ₁₂ et λ₁₆ Les longueurs d'onde λ₆, λ₇ et λ₈ sont destinées au satellite Sₙ₊₁, λ₁₁ et λ₁₂ sont destinées au satellite Sₙ₊₂, et λ₁₆ est destinée au satellite Sₙ₊₃.

Enfin, on voit que le satellite Sₙ émet sur quatre longueurs d'onde (λ₅, λ₉, λ₁₃, λ₁) destinées aux quatre satellites suivants. Il s'agit de la longueur d'onde λ₅ destinée à Sₙ₊₁, λ₉ destinée à Sₙ₊₂, λ₁₃ destinée à Sₙ₊₃ et λ₁ destinée à Sₙ₊₄.

Ainsi, dans cet exemple, un satellite peut adresser un message à n'importe quel autre satellite devant lui (ou derrière lui).

De façon générale, dans cet exemple à seize longueurs d'ondes, si le satellite Sₙ doit communiquer avec un satellite Sₙ₊ₖ, le message que Sₙ enverra à Sₙ₊ₖ sera relayé k/4 fois, si k est un multiple de 4 ou, si k n'est pas un multiple de 4, un nombre de fois égal à un entier immédiatement au-dessus de k/4.

Pour déterminer qu'un message sur une longueur d'onde reçue par un satellite doit être émis vers le sol ou relayé, on prévoit, à bord de chaque satellite, un organe de routage (qui sera décrit plus loin) qui détermine la destination en fonction du contenu du message.

On a représenté, sur la figure 5, les flux de données du satellite Sₙ avec le satellite précédent Sₙ₋₁ et le satellite suivant Sₙ₊₁, ainsi que les flux de données avec la station terrestre avec laquelle il est en communication. On voit sur ce schéma que le satellite Sₙ transmet sans traitement un premier flux de données fₐ, c'est-à-dire que le flux fₐ provenant du satellite Sₙ₋₁ est transmis sans traitement par le satellite Sₙ vers le satellite Sₙ₊₁.

Le satellite Sₙ reçoit aussi un flux de données f_{b} provenant du satellite Sₙ₋₁ qu'il transmet, par l'intermédiaire d'un organe de communication 70, vers une station terrestre 72.

Un flux f_{c} provenant du satellite Sₙ₋₁ est reçu par le dispositif de commutation 70 pour être réémis vers le satellite Sₙ₊₁. Dans ce cas, le satellite Sₙ joue le rôle de relais régénératif. C'est le contenu de chaque message qui détermine si ce message à λ₁, λ₂, λ₃ et/ou λ₄ doit être émis vers la station terrestre ou doit être réémis "à l'aval" vers un autre satellite sur une longueur d'onde λ₅, λ₉, λ₁₃ et λ₁.

Le satellite Sₙ reçoit également des informations d'une station terrestre 74 (qui peut être au même emplacement que la station 72). Ces informations forment un flux f_{d} qui, après traitement dans l'organe 70, est transmis vers le satellite Sₙ₊₁.

Enfin, le satellite Sₙ établit les communications entre les stations émettrice 74 et réceptrice 72. Ainsi, le flux fₑ est émis de la station 74 vers le satellite Sₙ, et après passage par l'organe 70, il est réémis vers la station réceptrice 72.

On va maintenant décrire en relation avec la figure 6 un mode d'exécution des moyens se trouvant à bord du satellite Sₙ pour réaliser les fonctions décrites en relations avec les figures 4 et 5.

Les flux de données fₐ, f_{b}, f_{c} provenant du satellite Sₙ₋₁ sont reçus par un télescope 80. Comme on l'a vu ci-dessus avec la figure 4, le flux de données fₐ, f_{b}, f_{c} comprend dix longueurs d'onde, à savoir les longueurs d'onde λ₁ à λ₄, λ₆ à λ₈, λ₁₁, λ₁₂ et λ₁₆.

Ces données traversent ensuite un préamplificateur optique 82 et un filtre 84 qui présente deux sorties, l'une, 84₁, pour les longueurs d'onde correspondant au flux fₐ transmis de façon transparente, c'est-à-dire λ₆, λ₇, λ₈, λ₁₁, λ₁₂ et λ₁₆, et une sortie 84₂ pour les flux f_{b} et f_{c} aux longueurs d'onde λ₁, λ₂, λ₃ et λ₄.

La sortie 84₂ est connectée à un récepteur 86 recevant les longueurs d'onde λ₁ à λ₄ et les transformant en un train de données numériques qui est traité et routé par un organe de routage 88. L'organe de routage transmet le flux f_{b} par une liaison hertzienne RF vers la station 72. Cet organe de routage transmet aussi le flux f_{c} vers la sortie optique destinée au satellite Sₙ₊₁.

L'organe de routage 88 comporte, par ailleurs, uneentrée recevant les flux f_{d}, fₑ provenant de la station 74. Quatre sorties numériques de l'organe de routage 88 transmettent le flux f_{d} en même temps que le flux f_{c}. Les flux numériques f_{c} et fd sont codés par un codeur 90 à quatre voies, le nombre de voies étant égal au nombre de sorties numériques de l'organe de routage 88.

Afin que la qualité de la transmission soit indépendante du nombre de satellites relais, le taux de codage de correction d'erreurs dépend du nombre de satellites devant être traversés avant d'atteindre le satellite cible, Autrement dit, le codage de correction d'erreurs sera d'autant plus robuste que le nombre de satellites relais sera grand.

Les signaux numériques de chacune des quatre voies du codeur 90 modulent quatre lasers 92 émettant sur quatre longueurs d'onde correspondant aux satellites cibles, c'est-à-dire λ₅ vers Sₙ₊₁, λ₉ vers Sₙ₊₂, λ₁₃ vers Sₙ₊₃ et λ₁ vers Sₙ₊₄.

Ces signaux optiques des flux f_{c} et f_{d} sont multiplexés par un multiplexeur optique 94 à quatre voies d'entrée et une sortie 94₁ qui est reliée à une première entrée 96₁ d'un coupleur optique 96.

La sortie 84₁ du filtre 84 qui délivre le flux fₐ aux longueurs d'onde λ₆, λ₇, λ₈, λ₁₁, λ₁₂ et λ₁₆ est connectée à l'entrée d'un amplificateur optique 98 dont la sortie est reliée à une autre entrée 96₂ du coupleur 96.

La sortie de ce coupleur optique 96 est reliée à l'entrée d'un télescope 102 par l'intermédiaire d'un amplificateur optique 100.

Le télescope 102 émet vers le satellite Sₙ₊₁.

Il est à noter que les entrées du coupleur 96 sont reliées par des fibres optiques aux organes qui les précèdent, c'est-à-dire, d'une part, au multiplexeur 94, et d'autre part, à l'amplificateur 98. De même, la connexion du filtre 84 à l'amplificateur 98 est effectuée par fibres optiques ainsi que les connexions entre le coupleur 96 et l'amplificateur 100 et entre l'amplificateur 100 et le télescope 102.

On remarque que les traitements à bord du satellite Sₙ sont minimisés.

## Revendications

1. Procédé de communication entre stations terrestres par l'intermédiaire de satellites tournant autour de la terre et faisant partie d'une constellation survolant au moins une fraction importante du globe, chaque station terrestre communiquant, pendant un temps déterminé, avec un satellite donné de la constellation, les stations terrestres (16, 18) communiquant entre elles par l'intermédiaire des deux satellites donnés respectifs (20, 22) avec lesquels lesdites stations sont respectivement en communication, **caractérisé en ce que** la communication entre ces deux satellites (20, 22) est effectuée par l'intermédiaire d'un lien prédéterminé (24, 26) de communication, **en ce que** les liaisons entre satellites sont du type optique, et **en ce que** les messages émis par chaque satellite vers les suivants dans le lien prédéterminé s'effectuent suivant un nombre donné K de longueurs d'ondes optiques porteuses, la première de ces longueurs d'ondes étant destinée à transmettre des messages vers le satellite immédiatement suivant dans le lien, et la longueur d'onde de rang i de cette suite étant destinée à transmettre des messages vers le satellite de rang i, dans le lien, après ce satellite émetteur.

2. Procédé selon la revendication 1, **caractérisé en ce que**, pour la communication entre les deux satellites donnés (20, 22), on prévoit au moins un second lien prédéterminé.

3. Procédé selon la revendication 2, **caractérisé en ce que** les deux liens prédéterminés forment une communication faisant le tour de la terre.

4. Procédé selon la revendication 3 ou 24, **caractérisé en ce que** la communication entre les deux satellites donnés s'effectue prioritairement par l'intermédiaire du premier lien prédéterminé.

5. Procédé selon la revendication 4, **caractérisé en ce que** la communication entre les deux satellites donnés (20, 22) s'effectue par l'intermédiaire du second lien prédéterminé en cas de défaillance du premier lien prédéterminé.

6. Procédé selon l'une quelconque des revendications précédentes, **caractérisé en ce que** chaque satellite est utilisable, en outre, pour établir des communications entre stations terrestres se trouvant dans son champ de vision.

7. Procédé selon l'une quelconque des revendications précédentes, **caractérisé en ce que** les liaisons entre stations terrestres et satellites sont du type hertzien (RF).

8. Procédé selon l'une quelconque des revendications précédentes, **caractérisé en ce que** les messages entre les deux satellites donnés sont protégés par des codes correcteurs d'erreurs et **en ce que** le taux de codage de correction d'erreurs est d'autant plus élevé qu'est grand le nombre de satellite(s) du lien prédéterminé.

## Patentansprüche

1. Verfahren zur Kommunikation zwischen Bodenstationen über um die Erde rotierende Satelliten, die Teil einer Konstellation sind, die wenigstens einen beträchtlichen Bruchteil der Erdoberfläche überfliegt, wobei jede Bodenstation während einer festgelegten Zeit mit einem gegebenen Satelliten der Konstellation kommuniziert und die Bodenstationen (16, 18) untereinander über zwei jeweils gegebene Satelliten (20, 22) kommunizieren, mit denen diese Stationen jeweils in Kommunikation sind, **dadurch gekennzeichnet, dass** die Kommunikation zwischen diesen zwei Satelliten (20, 22) über eine vorgegebene Kommunikationsverbindung (24, 26) erfolgt, dass die Verbindungen zwischen Satelliten vom optischen Typ sind, und dass die Meldungen, die von jedem Satelliten zu den in der vorgegebenen Verbindung folgenden gesendet werden, über eine gegebene Anzahl K von optischen Trägerwellenlängen erfolgen, wobei die erste dieser Wellenlängen dazu bestimmt ist, Meldungen an den unmittelbar nachfolgenden Satelliten in der Verbindung zu übertragen und die Wellenlänge vom Rang i dieser Folge dazu bestimmt ist, Meldungen an den Satelliten vom Rang i nach dem Sendersatelliten in der Verbindung zu übertragen.

2. Verfahren nach Anspruch 1, **dadurch gekennzeichnet, dass** für die Kommunikation zwischen zwei gegebenen Satelliten (20, 22) wenigstens eine zweite vorgegebene Verbindung vorgesehen wird.

3. Verfahren nach Anspruch 2, **dadurch gekennzeichnet, dass** die zwei vorgegebenen Verbindungen eine die Erde umrundende Kommunikation bilden.

4. Verfahren nach Anspruch 3 oder 2, **dadurch gekennzeichnet, dass** die Kommunikation zwischen den zwei gegebenen Satelliten vorrangig über die erste vorgegebene Verbindung erfolgt.

5. Verfahren nach Anspruch 4, **dadurch gekennzeichnet, dass** die Kommunikation zwischen den zwei gegebenen Satelliten (20, 22) über die zweite vorgegebene Verbindung im Falle des Versagens der ersten vorgegebenen Verbindung erfolgt.

6. Verfahren nach einem beliebigen der vorhergehenden Ansprüche, **dadurch gekennzeichnet, dass** jeder Satellit ferner verwendbar ist, um Kommunikationen zwischen sich in seinem Blickfeld befindlichen Bodenstationen zu etablieren.

7. Verfahren nach einem beliebigen der vorhergehenden Ansprüche, **dadurch gekennzeichnet, dass** die Verbindungen zwischen Bodenstationen und Satelliten Funkverbindungen (RF) sind.

8. Verfahren nach einem beliebigen der vorhergehenden Ansprüche, **dadurch gekennzeichnet, dass** die Meldungen zwischen den zwei Satelliten durch Fehlerkorrekturcodes geschützt sind, und dass die Fehlerkorrekturcoderate um so höher ist, je größer die Zahl der Satelliten der vorgegebenen Verbindung ist.

## Claims

1. A method of communication between ground stations via satellites traveling around the Earth and forming part of a constellation overflying at least a major fraction of the Earth, each ground station communicating, during a particular time, with a given satellite of the constellation, the ground stations (16, 18) communicating with each other via respective given satellites (20, 22) with which said stations are respectively communicating, **characterized in that** communication between said two satellites (20, 22) is effected through the intermediary of a predetermined communications link (24, 26), **in that** the links between satellites are of the optical type, and **in that** messages are transmitted by each satellite to subsequent satellites in the predetermined link using a given number K of optical carrier wavelengths, the first wavelength being used to carry messages to the next satellite in the link and the i^{th} wavelength of that series being used to carry messages to the i^{th} satellite in the link after the transmitting satellite.

2. A method according to claim 1, **characterized in that** at least one second predetermined link is provided for communication between the given two satellites (20, 22).

3. A method according to claim 2, **characterized in that** the predetermined two links form a link extending around the Earth.

4. A method according to claim 2 or claim 3, **characterized in that** communication between the given two satellites via the first predetermined link has priority.

5. A method according to claim 4, **characterized in that** the given two satellites (20, 22) communicate via the second predetermined link if the first predetermined link fails.

6. A method according to any one of the preceding claims, **characterized in that** each satellite can also be used for communications between ground stations within its field of view.

7. A method according to any one of the preceding claims, **characterized in that** the links between ground stations and satellites are radio links (RF).

8. A method according to any one of the preceding claims, **characterized in that** messages between the given two satellites are protected by error correcting codes and **in that** the robustness of error correcting encoding is proportional to the number of satellites in the predetermined link.
